Europäisches Patentamt

European Patent Office

Office européen des brevets

(11) Veröffentlichungsnummer: **0 485 726 A2**

# (12) EUROPÄISCHE PATENTANMELDUNG

(21) Anmeldenummer: **91116815.1**

(22) Anmeldetag: **02.10.91**

(51) Int. Cl.5: **B29C 45/17**

(30) Priorität: **15.11.90 DE 4036412**

(43) Veröffentlichungstag der Anmeldung:
**20.05.92 Patentblatt 92/21**

(84) Benannte Vertragsstaaten:
**AT DE ES FR GB IT NL SE**

(71) Anmelder: **Möller Werke GmbH**
**Auf dem Kupferhammer**
**W-4800 Bielefeld 14(DE)**

(72) Erfinder: **Gnass, Christian**
**Vilsendorfer Strasse 2**
**W-4800 Bielefeld 15(DE)**
Erfinder: **Plöger, Horst**
**Botweg 18**
**W-4800 Bielefeld 14(DE)**

(74) Vertreter: **Patentanwälte Dipl.-Ing. Bodo**
**Thielking Dipl.-Ing. Otto Elbertzhagen**
**Gadderbaumer Strasse 20**
**W-4800 Bielefeld 1(DE)**

(54) **Düse zum Injizieren von Gas in die Kavität eines Kunststoffformwerkzeugs, insbesondere einer Spritzgussform.**

(57) Bei einer Düse zum Injizieren von Gas in die Kavität eines Kunststofformwerkzeugs, insbesondere einer Spritzgußform, ist der Düsenquerschnitt von einem Düseneinsatz ausgefüllt, der eine Vielzahl von feinen Durchgangskanälen aufweist,die lediglich einen Gasdurchtritt, nicht aber einen Kunststoffeintritt oder Kunststoffdurchtritt zulassen. Eine derartige Düse erlaubt den Verzicht auf bisher bei Gasinnendruckverfahren zum Einsatz des Druckgases verwendete Düsen, die bewegliche Verschlußkörper aufweisen und nach Art von Rückschlagventilen aufgebaut sind.

FIG. 2

EP 0 485 726 A2

Die Erfindung betrifft eine Düse zum Injizieren von Gas in die Kavität eines Kunststofformwerkzeugs,insbesondere einer Spritzgußform, welche zur Anordnung an der Einmündung eines Druckgaskanals in die Kavität und zum Absperren des Druckgaskanals gegen einen Kunststoffeintritt ausgebildet ist.

Derartige Düsen werden bei der Herstellung von Kunststoffspritzgußteilen nach dem Gasinnendruckverfahren verwendet. Nach diesem Verfahren hergestellte Kunststoffspritzgußteile sind nicht massiv ausgebildet, sondern haben einen zentralen Hohlraum, der während des Spritzgußvorgangs dadurch gebildet wird, daß Gas in die Kavität eingesetzt wird.

Die bekannten Düsen sind ähnlich aufgebaut wie ein Rückschlagventil, welches Gas nur in eine Richtung durchläßt.

Derartige Düsen werden von einem Servomotor, beispielsweise einem Hydraulikzylinder betätigt. Damit das Gas aus dem fertiggestellten Formteil evakuiert werden kann, muß die Düse mittels des Hydraulikzylinders aus der Einsetzlage zurückgefahren werden.Eine solche Mechanik ist störanfällig und kompliziert. Außerdem tritt das Gas unkontrolliert in die Atmosphäre aus.

Darüber hinaus muß die bekannte Düse beheizt werden. Dies ist nötig, um plastifizierten Kunststoff, welcher beim Kunststoffspritzvorgang in die für den Gaseintritt geöffnete Düse läuft, plastifiziert zu halten. Während der Gasinjektion wird das in die Düse gelangte plastifizierte Material sowohl mittels des Verschlußkörpers als auch mittels des Gasdrucks wieder in die Kavität gedrückt.Der Verschlußkörper, beispielsweise eine Kugel, wird üblicherweise so heiß, daß das in der Düse befindliche Kunststoffmaterial verbrennt und sich auf dem Verschlußkörper festsetzt. Dies hat zur Folge, daß der Verschlußkörper des bekannten Ventils dann nicht mehr abdichten kann.

Ein weiterer Nachteil der bekannten Düse liegt darin, daß sie einen großen Einbauraum benötigt. Hierdurch wird die Möglichkeit beschränkt, mehrere Gasinjektionsstellen im Werkzeug zu installieren.

Es ist auch bereits bekannt, in einer Spritzgußform, mit der nicht nach dem Gasinnendruckverfahren gearbeitet wird, sondern deren Kavität vollständig mit Spritzgußmaterial ausgefüllt wird, eine Entlüftungsöffnung vorzusehen und durch diese Entlüftungsöffnung die von der beim Spritzen durch die Kunststoffmasse verdrängte Luft aus der Kavität entweichen zu lassen. Die Entlüftungsöffnung ist mit einem Einsatz verschlossen, der eine Vielzahl von feinen Durchgangskanälen aufweist. Durch die feinen Durchgangskanäle kann nur die verdrängte Luft entweichen, während Kunststoff nicht in die Durchgangskanäle eintreten kann.

Ausgehend von diesem Stand der Technik liegt der Erfindung die Aufgabe zugrunde, eine Düse zum Injizieren von Gas in die Kavität eines Kunststofformwerkzeugs der als bekannt vorausgesetzten Art so auszubilden, daß sie die Nachteile der bekannten Düse vermeidet und ohne mechanischen Antrieb sowie einfach, platzsparend und besonders funktiontüchtig ausgebildet ist.

Die Lösung dieser Aufgabe erfolgt erfindungsgemäß dadurch, daß der Düsenquerschnitt von einem Düseneinsatz ausgefüllt ist, der eine Vielzahl von feinen Durchgangskanälen aufweist, die lediglich einen Gasdurchtritt, nicht aber einen Kunststoffeintritt oder Kunststoffdurchtritt zulassen, wobei der Düseneinsatz zum Durchströmen von Gas in zueinander entgegengesetzte Durchtrittsrichtungen ausgebildet ist.

Die erfindungsgemäße Ausbildung der Injektionsdüse führt zu einer raumgreifenden Verbesserung gegenüber den bisher bekannten Injektionsdüsen, die stets bewegliche Verschlußelemente aufwiesen. Demgegenüber verzichtet die Erfindung erstmalig bei einer Injektionsdüse auf bewegliche Verschlußelemente und beschränkt sich auf eine Ausbildung des Düseneinsatzes mit feinen Durchgangskanälen, welche zum Durchströmen von Gas in zueinander entgegensetzte Durchtrittsrichtungen ausgebildet sind. Die Erfindung hat überraschend erkannt, daß für Gasinjektionsdüsen, insbesondere für derartige Düsen, die bei dem Gasinnendruckverfahren verwendet werden, auf problematische, mechanisch bewegliche und mit einem Antrieb versehene Elemente vollständig verzichtet werden kann.

Bevorzugte Ausführungsformen der Erfindung sind in den Unteransprüchen beschrieben.

Bei der erfindungsgemäßen Düse ist ein Verkleben durch Kunststoff ausgeschlossen. Das durch den Düseneinsatz strömende Druckgas wird sowohl beim Einbringen als auch beim Rückstrom gefiltert. Die Düse benötigt keinerlei Antrieb. Ihr Platzbedarf ist gering. Sie erlaubt einen schnellen Ein- und Ausbau an beliebigen Stellen im Werkzeug. Damit wird der Reparatur- und Austauschaufwand gering gehalten. Eine Beheizung der Düse ist unnötig. Die Düse kann bei allen bekannten Gasinnendruckverfahren für Spritzguß und für viele andere Kunststofformgebungsverfahren verwendet werden, beispielsweise bei Blasverfahren.

Nachstehend wird eine bevorzugte Ausführungsform der Erfindung anhand der Zeichnung im einzelnen erläutert. Es zeigen:

Figur 1 -  einen schematischen Schnitt durch einen Teil eines Mehrfach-Spritzgußwerkzeugs,

Figur 2 -  einen Längsschnitt durch die erfindungsgemäße Düse,

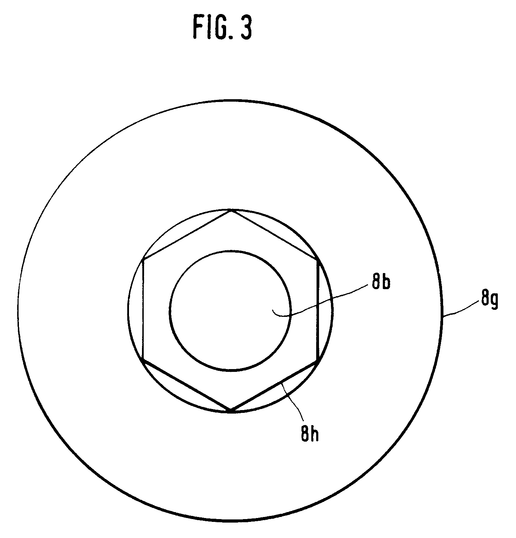

Figur 3 - eine Draufsicht auf die Düse gemäß Figur 2 in Richtung gemäß Pfeil III in Figur 2.

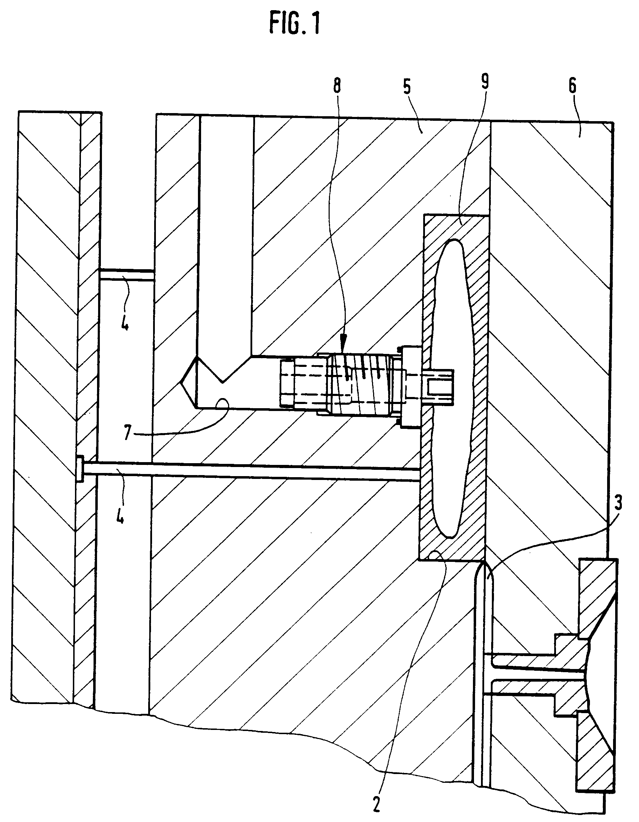

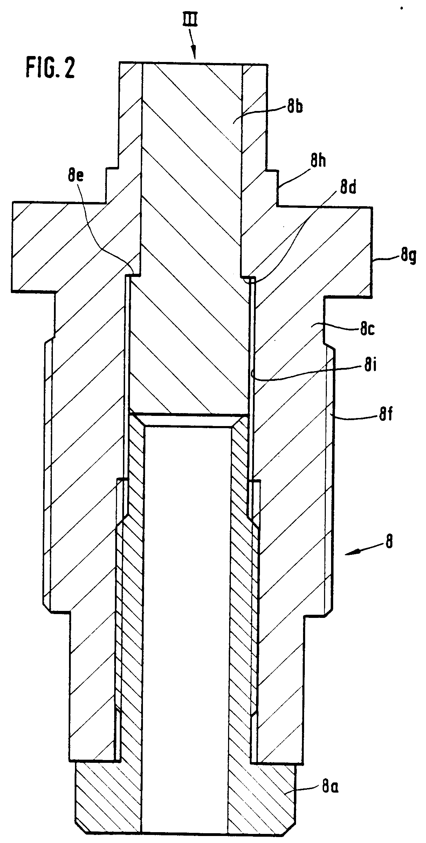

In Figur 1 sind zwei sich ergänzende Werkzeughälften mit 5 und 6 bezeichnet. In die mit 2 bezeichnete Kavität mündet der Angußkanal 3. Mit 4 sind Auswerfer für das im Gasinnendruckverfahren hergestellte Spritzgußteil 9 bezeichnet. In dem die Kavität 2 enthaltenden Werkzeugteil 5 ist ein Gasdruckkanal 7 vorgesehen, an dessen Ende und Übergang zur Kavität 2 die Düse angeordnet ist. Der Aufbau der Düse ist genauer aus ihrem Längsschnitt gemäß Figur 2 ersichtlich. Die Düse 8 besteht aus drei Einzelteilen:

Ein Gehäusebereich 8c besitzt einen mit Außengewinde 8f versehenen Schaftbereich, an den sich ein Kragen 8g anschließt. Neben dem Kragen 8g ist ein Sechskantbereich 8h vorgesehen, der ein Einschrauben des Gehäusebereichs 8c in eine am Ende des Druckgaskanals 7 vorgesehene Halterung erlaubt. In einen zentralen Durchgangskanal 8i des Gehäusebereichs 8c ist an dem zur Kavität 2 weisenden Ende ein Düsenkörper 8b eingesetzt. Der Düsenkörper 8b besitzt einen Bund 8e, der seinerseits an einem Kragen 8d anliegt. Eine Befestigungshülse 8a ist in den Durchgangskanal 8i eingeschraubt und drückt den Düseneinsatz 8b in seine dargestellte Position.

Der Düseneinsatz besteht vorzugsweise aus feinporigem Sintermetall. Es ist jedoch auch denkbar, auf andere Weise Durchgangsöffnungen in einem Düseneinsatz vorzusehen, welche ausreichend klein im Durchmesser bemessen sind, daß nur ein Gasdurchtritt, nicht aber ein Kunststoffdruchtritt oder -eintritt erfolgen kann.

Die feinen Durchgangskanäle haben bevorzugt einen Durchmesser, der unter Annahme eines runden Querschnitts kleiner als 5/100 mm ist. Der zulässige Durchmesser ist von dem zu verarbeitenden Kunststoff abhängig. Er ist in vielen Fällen kleiner als 3/100 mm oder auch als 2/100 mm. Ein besonders bevorzugter Durchmesserbereich beträgt 3/1000 mm bis 2/100 mm.

**Patentansprüche**

1. Düse zum Injizieren von Gas in die Kavität eines Kunststofformwerkzeugs, insbesondere einer Spritzgußform, welche zur Anordnung an der Einmündung eines Druckgaskanals in die Kavität und zum Absperren des Druckgaskanals gegen einen Kunststoffeintritt ausgebildet ist, dadurch gekennzeichnet, daß der Düsenquerschnitt von einem Düseneinsatz (8b) ausgefüllt ist, der eine Vielzahl von feinen Durchgangskanälen aufweist, die lediglich einen Gasdurchtritt, nicht aber einen Kunststoffeintritt oder Kunststoffdurchtritt zulassen.

2. Düse nach Anspruch 1,
dadurch gekennzeichnet,
daß der Durchmesser der Durchgangskanäle kleiner als 5/100 mm ist.

3. Düse nach Ansprüchen 1 und 2,
dadurch gekennzeichnet,
daß der Durchmesser der Kanäle kleiner als 3/100 mm ist.

4. Düse nach einem oder mehreren der Ansprüche 1 bis 3,
dadurch gekennzeichnet,
daß der Durchmesser der Durchgangskanäle kleiner als 2/100 mm ist.

5. Düse nach einem oder mehreren der Ansprüche 1 bis 4,
dadurch gekennzeichnet,
daß der Durchmesser der Kanäle im Bereich zwischen 3/1000 mm bis 2/100 mm liegt.

6. Düse nach einem oder mehreren der Ansprüche 1 bis 5,
dadurch gekennzeichnet,
daß der Düseneinsatz (8b) aus einem feinporigen Sintermaterial besteht.

7. Düse nach Anspruch 6,
dadurch gekennzeichnet,
daß das Sintermaterial ein Sintermetall ist.

8. Düse nach einem oder mehreren der Ansprüche 1 bis 7,
dadurch gekennzeichnet,
daß der Düseneinsatz (8b) mittels einer Schraubhülse (8a) in einem Durchgangskanal (8i) der Düse (8) fixiert ist.

9. Düse nach Anspruch 8,
dadurch gekennzeichnet,
daß der Düseneinsatz (8b) als kreiszylindrischer Körper ausgebildet ist.

# FIG. 1

FIG. 2

FIG. 3